# EUROPEAN PATENT APPLICATION

(11) **EP 1 491 390 A1**
(43) Date of publication of application: **29.12.2004**
(21) Application number: 03745422.0
(22) Date of filing: 26.03.2003
(51) Int. Cl.: B60N 2/20, A47C 1/024

(54) **SEAT FOR VEHICLE**

(30) Priority: 29.03.2002 JP 2002094662
(71) Applicant: Johnson Controls Automotive Systems Corporation, Ayase-shi, Kanagawa 252-1121 (JP)
(72) Inventor: PARK, Gil Sam, Johnson Controls Aut. Systems Corp., Ayase-shi, Kanagawa252-1121 (JP)
(74) Representative: Dealtry, Brian
(86) International application number: PCT/JP2003/003727
(87) International publication number: WO 2003/082625

(57) **Abstract**

A seat for a vehicle according to the present invention is provided with a seatback having a seatback frame made from a pipe and sub-frames made from pipes, upper ends of which are respectively welded and fixed with the seat back frame, a reclining device configured to allow the seat back to tilt and support the seatback, a lifter device configured to allow the seat cushion to tip up and support the seat cushion in any tipping position, the lifter device being supported by and installed on the support frames and a pair of support frames supporting the seatback, the reclining device and the lifter device.

## Description

### TECHNICAL FIELD

The present invention relates to a seat for a vehicle such as an automobile, a ship, an airplane or a railroad coach, and, more specifically, to a seat for a vehicle, which is compactly constituted so that occupants can secure larger space.

### BACKGROUND ART

A vehicle such as the aforementioned automobile is generally provided with relatively large seats with regard to the spatial dimensions of the interior thereof so as to provide laid-back seating for occupants. While enlargement of vehicle seats increases comfort for the occupants, there is also a flip side that increased thickness of the seatback and the seat cushion reduces a space which the occupants may occupy and hence may spoil comfort for the occupants.

Japanese Patent Application Laid-open No. 09-169232 discloses a structure of a seat for a vehicle, in which side panels made of steel sheet are welded and fixedwith both sides of a seatback frame.

### DISCLOSURE OF INVENTION

According to the aforementioned structure, the seat can be constituted in a relatively compact constitution because the seatback frame is composed of a steel pipe. For reinforcement of the seatback frames, side panels made of steel sheets are fixed on both sides of the seatback frame. The side panels must be made in wide shapes in an antero-posterior direction and then applied for the reinforcement so as to ensure enough strength in the antero-posterior direction. Therefore thickness of the seatback is necessarily increased and the space for the occupants is reduced.

The present invention is achieved in view of the above problem and is intended for providing a compactly constituted seat for a vehicle.

A seat for a vehicle according to the present invention is provided with a pair of support frames supported by a vehicle body, a seatback including a seatback frame made from a pipe and sub-frames made from pipes, upper ends of the sub-frames being respectively welded and fixed with the seatback frame, the seatback being supported by the support frames with the seatback frame and the sub-frames, a reclining device configured to allow the seatback to tilt and support the seatback in any tilting position, the reclining device being supported by and installed on the support frames and a lifter device configured to allow the seat cushion to tip up and support the seat cushion in any tipping position, the lifter device being supported by and installed on the support frames.

The seatback is supported by the seatback frame and the sub-frames without having side panels, thereby the thickness of the seatback can be reduced. Moreover, the seatback, the reclining device and the lifter device are supported by and installed on the support frames and hence any structure under the seat cushion is not necessary to be installed. Therefore the seat cushion can be compactly constituted.

Preferably, the seat for a vehicle is configured so that each lower ends of the seatback frame and each lower sub-frames is separated to have a space in an antero-posterior direction and the reclining device falls within the space.

The reclining device does not projected from the seatback frames and the sub-frames, thereby the seatback can be compactly constituted.

More preferably, the seat for a vehicle is configured so that the reclining device is provided with a device mechanism and covers lower ends of the seatback frame and the lower ends of the sub-frames.

The seatback frame and the sub-frames are reinforced and the support of the reclining device is ensured.

Still preferably, the seat for a vehicle is configures so that the lifter device is provided with a sector gear and a gear so configured as to allow the seat cushion to tip up and support the seat cushion in any tipping position.

The lifter device is not necessary to have any complicated mechanism and hence compactly constituted, as well as any structure under the seat cushion is not necessary to be installed. Thereby the seat can be further compactly constituted.

### BRIEF DESCRIPTION OF DRAWINGS

Fig. 1 is a perspective view of a seat apparatus according to an embodiment of the present invention;
Fig. 2 is a side view of the seat apparatus according to the embodiment of the present invention;
Fig. 3 is a side view of a lifter device of the seat apparatus according to the embodiment of the present invention;
Fig. 4 is a side view of the seat apparatus according to the embodiment of the present invention, specifically showing a tip-up device and a walk-in mechanism; and
Fig. 5 is a perspective view of a reclining device of the seat apparatus according to the embodiment of the present invention.

### BEST MODE FOR CARRYING OUT THE INVENTION

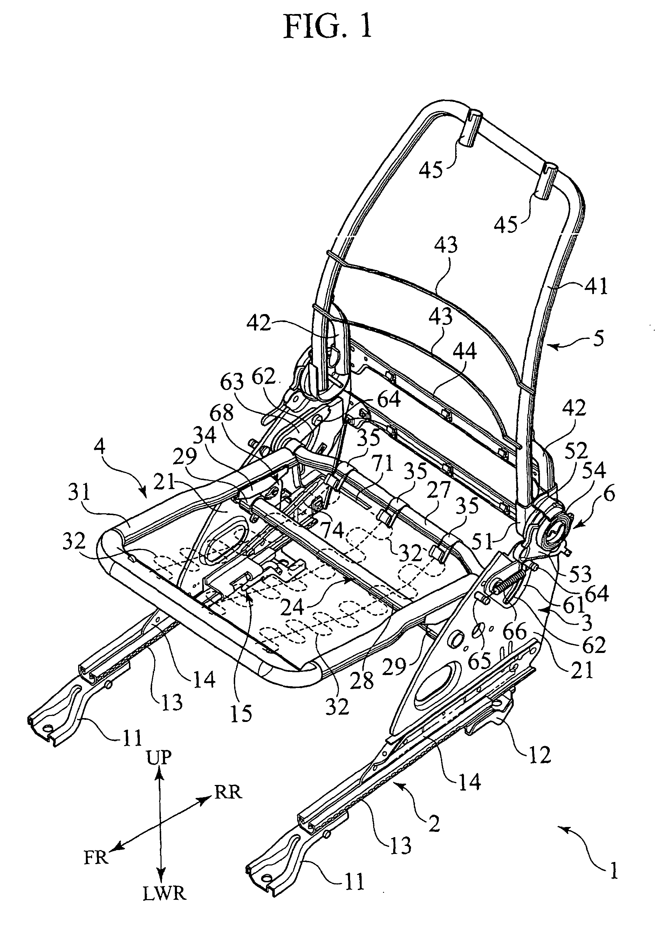

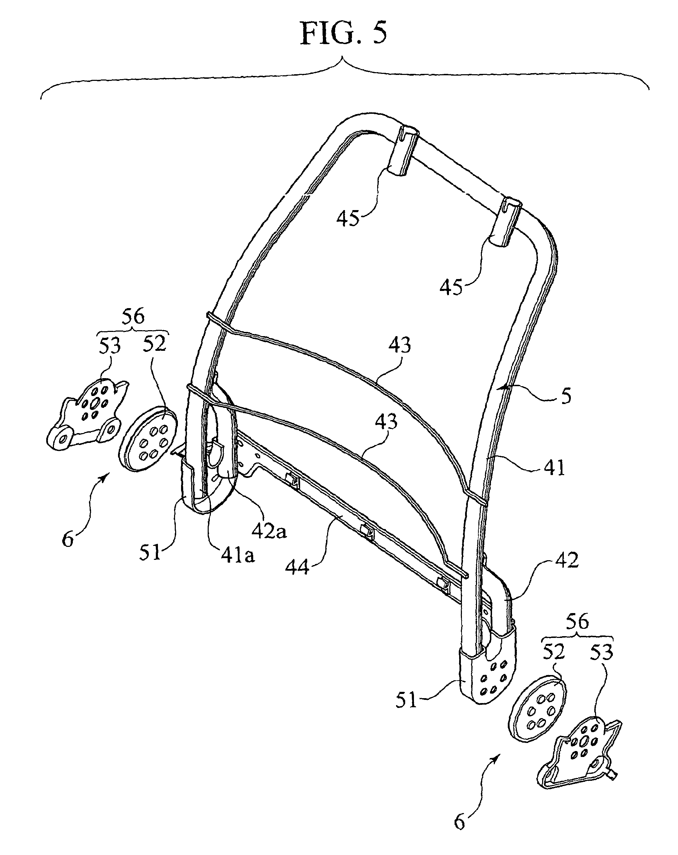

A seat apparatus 1 according to an embodiment of the present invention will be described hereinafter with reference to Figs. 1 through 5. In these drawings, FR denotes "forward", RR denotes "rearward", UP denotes "upward" and LWR denotes "downward". These directions are defined for convenience of an explanation and any embodiments opposed to such a definition can be arbitrarily embodied.

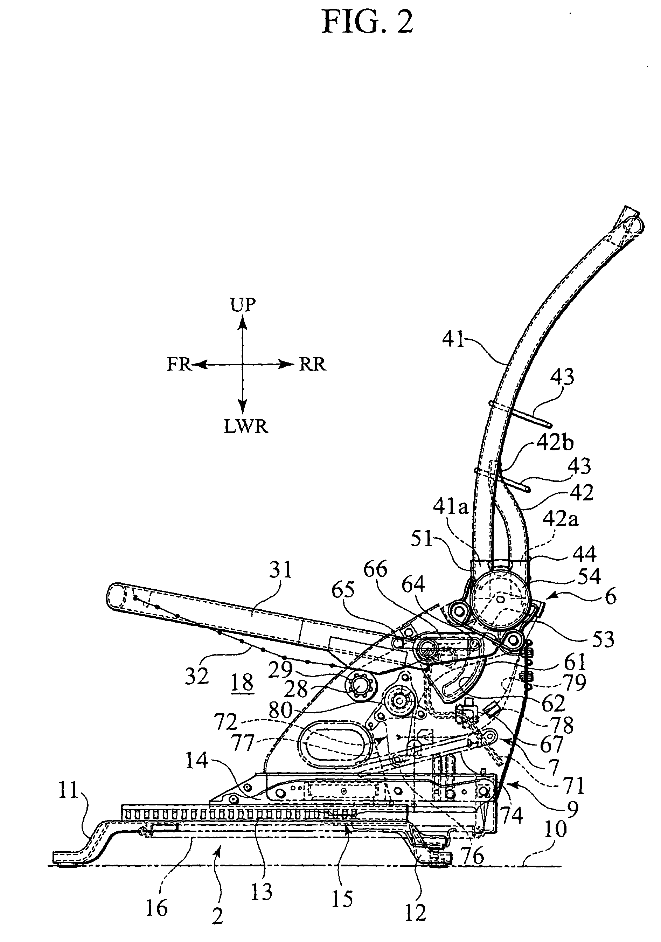

The seat apparatus 1 composes a basic framework of a seat for a vehicle and, as shown in Figs. 1 and 2, is generally provided with a pair of slide devices 2, a pair of support frames 3, a seat cushion portion 4, a seatback portion 5, a reclining device 6, a tip-up device 7, a lifter device 8 and a walk-in mechanism 9. The seat apparatus 1 is combined with some elements such as a headrest, a seat belt and a seat cover so as to form a seat for a vehicle, however, such elements are not shown in the drawings. The slide devices 2 are combined with a body of the vehicle and then in use.

The slide device 2 is provided with fixed rails 13 each having a slit on an upper side thereof, sliding rails 14, each of which is formed to have an inverted T-letter shape and slidably fitted into the slit, a slide-lock mechanism 15 for stopping the sliding rails 14 in a proper position and coil springs 16 which are respectively stretched between the fixed rails 13 and the sliding rails 14 so as to give force to the sliding rails 14 in a forward direction. Furthermore, though not shown in the drawings, rollers and ball bearings for smoothly sliding the sliding rails 14 on the fixed rails 13 are further provided. The slide devices 2 are provided at both sides of the seat in a symmetrical manner and fixed to a floor 10 (see Fig. 2) of a vehicle body by first brackets 11 respectively provided at a front thereof and second brackets 12 respectively provided at a rear thereof.

The support frames 3 are comprised of a pair of frame bodies 21 made of steel sheets formed in a substantially right triangular shape and respectively provided with oval openings 22. The paired frame bodies 21 are respectively fixed on the pair of fixed rails 14 in a manner that a base of the right triangle is directed downward, a side orthogonal to the base is vertically directed and a remaining hypotenuse is directed forward. The oval openings 22 are formed in an oval shape directed obliquely upward and forward so as to allow movement of a third shaft portion 27 described later.

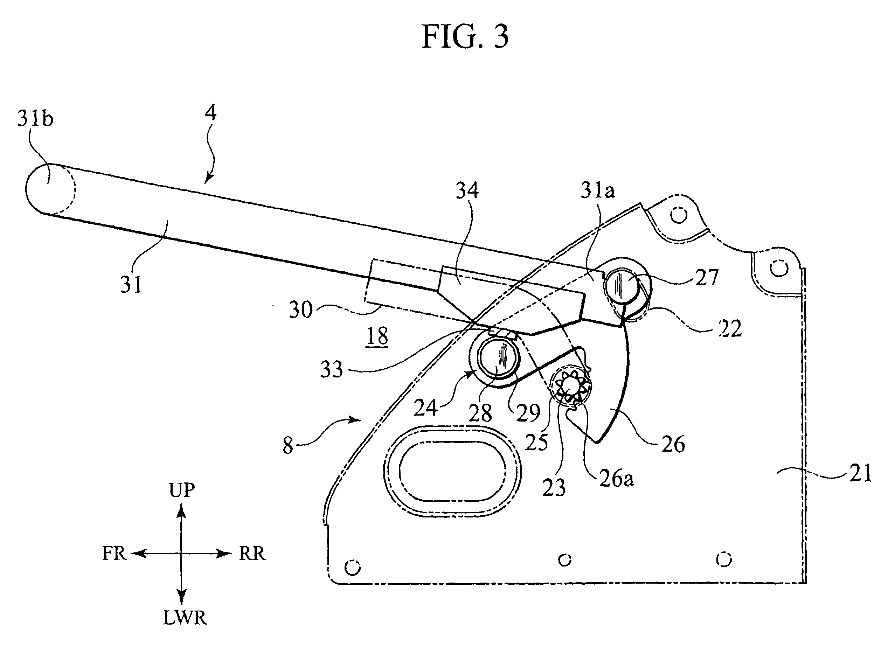

As shown in Fig. 3, the lifter device 8 is provided with a first shaft portion 23, a second shaft portion 24, which are projectingly provided on inner sides of the paired frame bodies 21, a gear 25 pivotally supported by the first shaft portion 23 and a sector gear 26 pivotally supported by the second shaft portion 24. The sector gear 26 has gear teeth 26a formed on the front side thereof, which engage with the gear 25 pivotally supported in front of the sector gear 26. The oval openings 22 are formed so that the major axes thereof substantially correspond with an arc around the first shaft portion 24. The gear 25 is capable of rotating by means of operation means 30. When lifting the operation means 30 upward, rotation of the gear 25 lets the sector gear 26 swing downward and a front end portion 31b of a cushion frame 31 swing upward. When reversely operating the operation means 30, the front end portion 31b swings downward.

As shown in Fig. 1, the seat cushion portion 4 is provided with a closed-loop-like cushion frame 31, brackets 35 plurally formed on the cushion frame 31 and a plurality of S-shape springs 32 respectively stretched in an antero-posterior direction via the plural brackets 35. The seat cushion portion 4 is covered with a pad and a cover, which are not shown in the drawings, so as to form a seat cushion. A rear end portion 31a of the cushion frame 31 is fixed to the third shaft portion 27. The cushion frame 31 is further provided with brackets 34 and absorbers 33 made of any material having viscoelasticity such as rubber and laid on a peripheral surface of an upper side of the second shaft portion 24 with having the brackets 34 and the absorbers 33 therebetween. The absorbers 33 reduce noise which may be generated when the cushion frame 31 hits the second shaft portion 24.

The second shaft portion 24 of the sector gear 26 is provided with a fixed shaft 28 fixed to the frame bodies 21 and rotation shafts 29 rotatably and pivotally supported by the fixed shaft 28. The fixed shaft 28 and the rotation shafts 29 are lubricated with a proper lubricant such as grease. The fixed shaft 28 is provided with retaining means, such as conically expanded both ends thereof, so as to prevent the rotation shafts 29 from displacement.

The seatback portion 5 is provided with a seatback frame 41, sub-frames 42 made of steel pipes, upper end portions 42b of which are welded and fixed with rear sides of lower end portions 41a of the seatback frame 41, and a plurality of wires 43 laid between both sides of the seatback frame 41. The seatback portion 5 is covered with a pad and a cover, which are not shown in the drawings, so as to form a seatback. The lower end portion 41a of the seatback frame 41 and lower end portion 42a of the sub-frame 42 is separated to have a space in an antero-posterior direction and the reclining device 6 falls within the space. The seatback portion 5 is provided with a plurality of holders 45 on an upper end thereof so as to support a headrest (not shown).

The reclining device 6 is provided with covers 51 for respectively covering the lower end portions 41a and the lower end portions 42a of the sub-frames 42, device mechanisms 56 respectively supported by the covers 51, springs 54 for constantly pressing the seatback portion 5 forward and a device lever 55 for releasing a lock of the reclining device 6. When releasing the lock of the reclining device 6, the seatback portion 5 tilts forward by the pressing force of the springs 54. Each device mechanism 56 is provided with a support member 52 and a base plate 53 supported on the upper end of the frame body 21. The lower end portions 41a of the seatback frame 41 are welded with front end portions of the covers 51 and the lower end portions 42a of the sub-frames 42 are welded with rear end portions of the covers 51, thereby the seatback frame 41 is fixed with the covers 51.

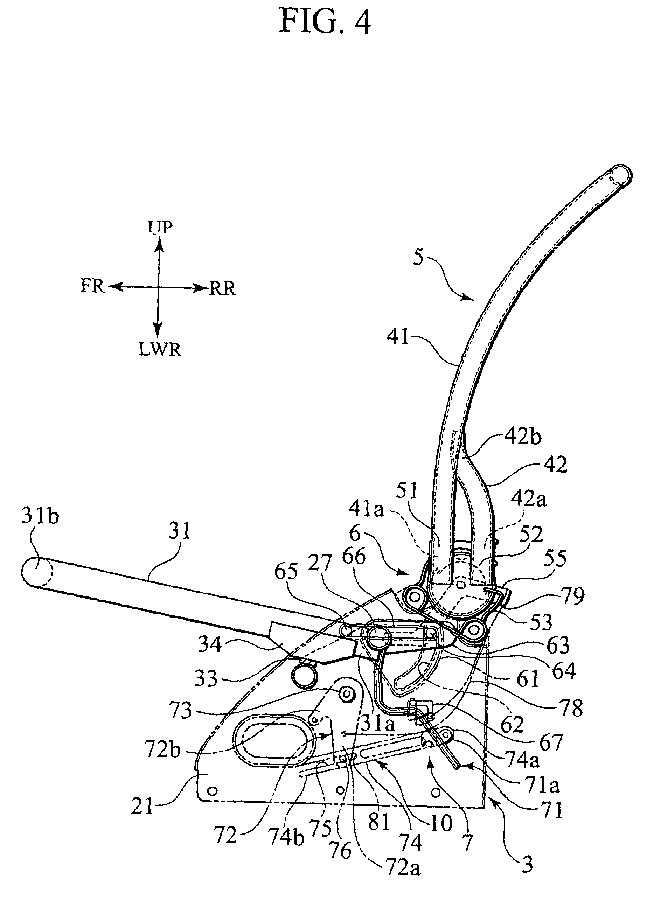

As shown in Fig. 4, the tip-up device 7 is provided with restriction portions 61, arms 63 extended reward from the third shaft portion 27 and fifth shaft portions 65 projectingly provided in front of the third shaft portion 27. The tip-up device 7 is fitted into the third shaft portion 27 so as to be exterior to the frame bodies 21. The restriction portion 61 is further provided with a through-hole 62 formed in a shape like an arc, which has a center on the third shaft portion 27. Each arm 63 is further provided with a fourth shaft portion 64 projectingly provided on an outer surface thereof and the fourth shaft portion 64 is movably fitted in the through-hole 62. Between the fourth shaft portions 64 and the fifth shaft portions 65, coil springs 66 are respectively laid and stretched. The fourth shaft portions 64 rotate around the third shaft portion 27 and the springs 66 are laid at the fifth shaft portions 65 disposed ahead of the third shaft portion 27, thereby the springs 66 give force to the fourth shaft portions 64 toward an upper end or a lower end of the through-hole 62. Therefore the vicinity of the center of the through-hole 62 is a dead point where the force by the springs 66 is lost and unstable.

As shown in Figs. 2 and 4, the walk-in mechanism 9 is provided with a pedal lever 71, a slide-release link 74 cooperatively working with the pedal lever 71 and a slide-release plate 72. The pedal lever 71 is extended from the third shaft portion 27 of the cushion frame 31 to a lower side of the seat apparatus 1 and has a pivot pin 71a at a middle thereof. The slide-release link 74 is formed in a substantially linear shape, a front end thereof is a fork end 74b having a cut 75 and a rear end 74a is rotatably and pivotaly supported by the pivot pin 71a. The slide-release plate 72 is a flat plate having a first wing 72a and a second wing 72b and being formed in a boomerang-like shape. The slide-release plate 72 is rotatably and pivotally supported by the frame bodies 21 with a sixth shaft portion 73. A pin 76 is projectingly formed on a tip end of the first wing 72a and slidably fitted to the cut 75. A proper clearance exists between a rear end 81 of the cut 75 and the pin 76. Slide-lock-release wires 78 and 77 are respectively connected to the first wing 72a and the second wing 72b. A reclining-release wire 79 linking with the reclining device 6 is connected to a middle of the pedal lever 71. A spring 80 constantly presses the slide-release plate 72 rearward.

The walk-in mechanism 9 regulates operation of the slide-lock device 15, the reclining device 6 and the tip-up device 7 in proportion to a shifting length of the pedal lever 71. When shifting the pedal lever 71 down, the cushion frame 31 swings upward around the third shaft portion 27. When further shifting the pedal lever 71 down in an intermediate position thereof, the fourth shaft portions 64 swing upward over the dead point and is hence given downward force by the springs 66, thereby the cushion frame 31 leaps up (tips up). Simultaneously, the rear end 74b of the slide-release link 74 is pressed downward and forward by the pedal lever 71, however, the pin 76 keeps still because the proper clearance exists between the rear end 81 and the pin 76. Meanwhile, when pressing the cushion frame 31 downward so that the fourth shaft portions 64 go over the dead point, the cushion frame 31 easily returns to its original position by means of the force by the springs 66.

When shifting the pedal lever 71 down in an end position thereof, the rear end 81 abuts and presses the pin 76 forward. Thereby the slide-release plate 72 swings around the sixth shaft portion 73 and the slide-release wires 77 and 78 are pulled so that the slide-lock mechanism 15 is released. Provided that the slide-lock mechanism 15 is released, the sliding rails 14 move forward by means of the force by the spring 16. Simultaneously, the reclining-release wire 79 is pulled downward so that the reclining device 6 is released, thereby the seatback portion 5 can be tilted forward.

Although the invention has been described above by reference to certain embodiments of the invention, the invention is not limited to the embodiments described above. Modifications and variations of the embodiments described above will occur to those skilled in the art, in light of the above teachings.

### INDUSTRIAL APPLICABILITY

All of the seatback portion, the reclining device and the lifter device in the seat for a vehicle can be compactly constituted so that occupants can secure larger space and comfort for the occupants can be increased.

## Claims

1. A seat for a vehicle comprising:
a pair of support frames supported by a vehicle body;
a seatback including a seatback frame made from a pipe and sub-frames made from pipes, upper ends of the sub-frames being respectively welded and fixed with the seatback frame, the seatback being supported by the support frames with the seatback frame and the sub-frames;
a reclining device configured to allow the seatback to tilt and support the seatback in any tilting position, the reclining device being supported by and installed on the support frames; and
a lifter device configured to allow the seat cushion to tip up and support the seat cushion in any tipping position, the lifter device being supported by and installed on the support frames.

2. The seat set forth in claim 1, wherein:
each lower end of the seatback frames and each lower end of the sub-frames is separated to have space in an antero-posterior direction and the reclining device falls within the space.

3. The seat set forth in claim 1 or 2, wherein:
the reclining device comprises a device mechanism and covers lower ends of the seatback frame and the lower ends of the sub-frames.

4. The seat set forth in any of claims 1 through 3, wherein:
the lifter device comprises a sector gear and a gear so configured as to allow the seat cushion to tip up and support the seat cushion in any tipping position.
